# EUROPEAN PATENT APPLICATION

(11) **EP 4 475 201 A1**
(43) Date of publication of application: **11.12.2024**
(21) Application number: 23780431.5
(22) Date of filing: 28.03.2023
(51) Int. Cl.: H01M 4/02, H01M 4/13, H01M 4/131, H01M 4/36, H01M 4/505, H01M 4/525, H01M 4/62

(54) **POSITIVE ELECTRODE FOR NON-AQUEOUS ELECTROLYTE POWER STORAGE ELEMENT, AND NON-AQUEOUS ELECTROLYTE POWER STORAGE ELEMENT COMPRISING SAME**

(30) Priority: 31.03.2022 JP 2022060761
(71) Applicant: GS Yuasa International Ltd., Kisshoin, Minami-ku, Kyoto-shi, Kyoto 601-8520 (JP)
(72) Inventor: UEMATSU Shinya, Kyoto-shi, Kyoto 601-8520 (JP); NAKANO Fumiya, Kyoto-shi, Kyoto 601-8520 (JP)
(74) Representative: Isarpatent
(86) International application number: PCT/JP2023/012355
(87) International publication number: WO 2023/190422

(57) **Abstract**

A positive electrode for a nonaqueous electrolyte energy storage device according to one aspect of the present invention includes a positive active material layer containing: first positive active material particles having a Feret diameter of 5 µm or less in a projection image obtained by scanning electron microscope (SEM) observation; second positive active material particles having a Feret diameter of more than 5 µm in a projection image obtained by SEM observation; and a conductive agent, wherein a content of the conductive agent in the positive active material layer is less than 1.1% by mass, and the first positive active material particles are secondary particles having a ratio of an average secondary particle size to an average primary particle size of 3 or less, or primary particles which are not substantially aggregated.

## Description

### TECHNICAL FIELD

The present invention relates to a positive electrode for a nonaqueous electrolyte energy storage device and a nonaqueous electrolyte energy storage device including the same.

### BACKGROUND ART

Nonaqueous electrolyte secondary batteries typified by lithium ion secondary batteries are often used for electronic devices such as personal computers and communication terminals, motor vehicles, and the like, because the batteries are high in energy density. The nonaqueous electrolyte secondary batteries generally include a pair of electrodes electrically separated from each other by a separator, and a nonaqueous electrolyte interposed between the electrodes, and are configured to allow charge transport ions to be transferred between the two electrodes for charge-discharge. In addition, capacitors such as lithium ion capacitors and electric double layer capacitors are also widely used as nonaqueous electrolyte energy storage devices other than the nonaqueous electrolyte secondary batteries.

As the positive electrode used in the nonaqueous electrolyte energy storage device, a positive electrode having a positive active material layer formed of a positive composite containing a positive active material, a conductive agent, a binder and the like is common (See Patent Documents 1 and 2).

### PRIOR ART DOCUMENT

### PATENT DOCUMENTS

Patent Document 1: WO 2014/156116 A
Patent Document 2: WO 2010/106768 A

### SUMMARY OF THE INVENTION

### PROBLEMS TO BE SOLVED BY THE INVENTION

In order to increase the energy density of the nonaqueous electrolyte energy storage device, for example, it is conceivable to reduce the content of the conductive agent and the like and increase the content of the positive active material in the positive active material layer. However, when the content of the conductive agent is reduced, the capacity retention ratio of the nonaqueous electrolyte energy storage device after a charge-discharge cycle may be greatly reduced.

An object of the present invention is to provide a positive electrode for a nonaqueous electrolyte energy storage device capable of suppressing a decrease in capacity retention ratio of the nonaqueous electrolyte energy storage device after a charge-discharge cycle, which occurs when the content of a conductive agent in a positive active material layer is reduced, and a nonaqueous electrolyte energy storage device including such a positive electrode.

### MEANS FOR SOLVING THE PROBLEMS

A positive electrode for a nonaqueous electrolyte energy storage device according to one aspect of the present invention includes a positive active material layer containing: first positive active material particles having a Feret diameter of 5 pm or less in a projection image obtained by scanning electron microscope (SEM) observation; second positive active material particles having a Feret diameter of more than 5 pm in a projection image obtained by SEM observation; and a conductive agent, wherein a content of the conductive agent in the positive active material layer is less than 1.1% by mass, and the first positive active material particles are secondary particles having a ratio of an average secondary particle size to an average primary particle size of 3 or less, or primary particles which are not substantially aggregated.

A nonaqueous electrolyte energy storage device according to one aspect of the present invention includes the positive electrode for a nonaqueous electrolyte energy storage device according to one aspect of the present invention.

### ADVANTAGES OF THE INVENTION

According to one aspect of the present invention, it is possible to provide a positive electrode for a nonaqueous electrolyte energy storage device capable of suppressing a decrease in capacity retention ratio of the nonaqueous electrolyte energy storage device after a charge-discharge cycle, which occurs when the content of a conductive agent in a positive active material layer is reduced, and a nonaqueous electrolyte energy storage device including such a positive electrode.

### BRIEF DESCRIPTION OF THE DRAWINGS

Fig. 1 is a see-through perspective view illustrating an embodiment of a nonaqueous electrolyte energy storage device.
Fig. 2 is a schematic diagram illustrating an embodiment of an energy storage apparatus including a plurality of nonaqueous electrolyte energy storage devices.

### MODE FOR CARRYING OUT THE INVENTION

First, an outline of a positive electrode for a nonaqueous electrolyte energy storage device and a nonaqueous electrolyte energy storage device disclosed in the present specification will be described.

[1]: A positive electrode for a nonaqueous electrolyte energy storage device according to one aspect of the present invention includes a positive active material layer containing: first positive active material particles having a Feret diameter of 5 pm or less in a projection image obtained by scanning electron microscope (SEM) observation; second positive active material particles having a Feret diameter of more than 5 pm in a projection image obtained by SEM observation; and a conductive agent, wherein a content of the conductive agent in the positive active material layer is less than 1.1% by mass, and the first positive active material particles are secondary particles having a ratio of an average secondary particle size to an average primary particle size of 3 or less, or primary particles which are not substantially aggregated.

According to the positive electrode according to [1], it is possible to suppress a decrease in the capacity retention ratio of the nonaqueous electrolyte energy storage device after a charge-discharge cycle, which occurs when the content of the conductive agent in the positive active material layer is reduced. The reasons therefor are not clear, but the following reasons are presumed. The inventors have confirmed that when the content of the conductive agent in the positive active material layer is as small as less than 1.1% by mass, at the beginning of a charge-discharge cycle, particle cracking originating from a grain boundary of positive active material particles composed of secondary particles having a small particle size and pulverization associated with the particle cracking occur, and this causes a decrease in capacity retention ratio. On the other hand, secondary particles having a ratio of the average secondary particle size to the average primary particle size of 3 or less, or primary particles that are not substantially aggregated (Hereinafter, these particles are also referred to as "single particle-based particles".) have fewer grain boundaries than general secondary particles formed by aggregation of a large number of primary particles, and therefore particle cracking originating from a grain boundary which occurs at the beginning of a charge-discharge cycle or the like, and pulverization associated with the particle cracking are unlikely to occur. In the positive electrode according to [1], it is presumed that since the first positive active material particles having a small particle size (Feret diameter) of 5 pm or less are such single particle-based particles, pulverization of the positive active material particles is suppressed, and a decrease in the capacity retention ratio of the nonaqueous electrolyte energy storage device after a charge-discharge cycle can be suppressed.

The Feret diameter of the positive active material particles (first positive active material particles and second positive active material particles) contained in the positive active material layer, and the average primary particle size and the average secondary particle size of the first positive active material particles are based on measured values of projection images of fifty positive active material particles arbitrarily extracted, which are observed in an SEM image of the positive active material particles acquired using an SEM. Specifically, it is obtained as follows.

### (1) Preparation of sample for measurement

The positive electrode to be measured is fixed with a thermosetting resin. With the use of a cross-section polisher, a cross section of the positive electrode fixed with the resin is exposed to prepare a sample for measurement. It is to be noted that the positive electrode to be measured are prepared in accordance with the following procedure. The nonaqueous electrolyte energy storage device is discharged at a constant current with a current of 0.1 C until the voltage becomes an end-of-discharge voltage under normal usage, so that the energy storage device is brought to a discharged state. The term "normal use" refers to use of the nonaqueous electrolyte energy storage device under the charge-discharge conditions recommended or specified for the nonaqueous electrolyte energy storage device. The nonaqueous electrolyte energy storage device in the discharged state is disassembled to take out the positive electrode, and the positive electrode is sufficiently washed with dimethyl carbonate, and then dried under reduced pressure at room temperature. The operations from the disassembly of the nonaqueous electrolyte energy storage device to the preparation of the positive electrode to be measured are performed in a dry air atmosphere with a dew point of -40°C or lower. When the positive electrode before the nonaqueous electrolyte energy storage device is assembled can be prepared, the positive electrode before the nonaqueous electrolyte energy storage device is assembled can be measured.

### (2) Acquisition of SEM image

For acquiring an SEM image, JSM-7001F (manufactured by JEOL Ltd.) is used as a scanning electron microscope. For the SEM image, a secondary electron image is observed. The acceleration voltage is 15 kV. The observation magnification is set such that the number of positive active material particles appearing in one field of view is three or more and fifteen or less. The obtained SEM image is stored as an image file. In addition, various conditions such as spot diameter, working distance, irradiation current, luminance, and focus are appropriately set so as to make the contour of the positive active material particles clear.

### (3) Calculation of Feret diameter of positive active material particles

Fifty positive active material particles are arbitrarily extracted from the acquired SEM image, and the Feret diameter (constant direction diameter) of the projection image (region surrounded by the outline) of each positive active material particle is measured. The particles having a measured Feret diameter of 5 pm or less are the first positive active material particles, and the particles having a measured Feret diameter of more than 5 pm are the second positive active material particles. That is, the individual positive active material particles are classified into either the first positive active material particles or the second positive active material particles based on whether or not the Feret diameter is 5 pm or less.

### (4) Calculation of average primary particle size and average secondary particle size of first positive active material particles

For each of the positive active material particles classified as the first positive active material particles in the above (3), the Feret diameter (primary particle size) of primary particles constituting each of the first positive active material particles is determined. The primary particle is a particle in which no grain boundary is observed in appearance in the SEM image. The number average value of the measured primary particle size (Feret diameter of primary particles) is taken as the average primary particle size.

In addition, the number average value of the Feret diameters of the first positive active material particles obtained in the above (3) is taken as the average secondary particle size of the first positive active material particles. Even when the first positive active material particles contain positive active material particles composed of only primary particles, the average secondary particle size is calculated including the Feret diameter of the positive active material particles.

The average primary particle size and the average secondary particle size in the second positive active material particles can also be determined by the same procedure as in the case of the first positive active material particles.

The "primary particles that are not substantially aggregated" refer to primary particles in which a plurality of primary particles exist independently without being aggregated, or primary particles in a state in which the primary particle and another primary particle are not generally directly bonded to each other in the SEM image.

[2]: In the positive electrode according to [1], the conductive agent may be fibrous carbon. By using fibrous carbon as the conductive agent, good conductivity can be secured although the content of the conductive agent is small, and the discharge capacity, energy density, and the like of the nonaqueous electrolyte energy storage device can be increased.

The "fibrous carbon" refers to a carbonaceous material having a deformable elongated shape. The ratio of the average length to the average diameter of the fibrous carbon is, for example, 10 or more. The average diameter and average length of the fibrous carbon are based on the measured values of arbitrary ten fibrous carbons in an SEM image acquired by the same method as the Feret diameter of the positive active material particles.
[3]: In the positive electrode according to [1] or [2], the first positive active material particles may have an average primary particle size of 2.8 µm or more. Such a large average primary particle size of the first positive active material particles means that each of the first positive active material particles is composed of a smaller number of primary particles. In such a case, the first positive active material particles are less likely to be pulverized, and thus a decrease in the capacity retention ratio of the nonaqueous electrolyte energy storage device after a charge-discharge cycle can be further suppressed.
[4]: In the positive electrode according to any one of [1] to [3], a transition metal composite oxide containing a nickel element may be contained as the first positive active material particles. In such a case, it is possible to effectively suppress a decrease in the capacity retention ratio of the nonaqueous electrolyte energy storage device after a charge-discharge cycle, which is particularly likely to occur when the content of the conductive agent in the positive active material layer is reduced.
[5]: A nonaqueous electrolyte energy storage device according to one aspect of the present invention includes the positive electrode according to any one of [1] to [4]. In the nonaqueous electrolyte energy storage device according to [5], a decrease in the capacity retention ratio after a charge-discharge cycle, which occurs when the content of the conductive agent in the positive active material layer is reduced, is suppressed.

A positive electrode for a nonaqueous electrolyte energy storage device according to an embodiment of the present invention, a method for producing the positive electrode, a nonaqueous electrolyte energy storage device, an energy storage apparatus, a method for producing a nonaqueous electrolyte energy storage device, and other embodiments are described in detail. It is to be noted that the names of the respective constituent members (respective constituent elements) for use in the respective embodiments may be different from the names of the respective constituent members (respective constituent elements) for use in the background art.

### <Positive electrode for nonaqueous electrolyte energy storage device>

A positive electrode for a nonaqueous electrolyte energy storage device (hereinafter, also referred to simply as a "positive electrode") according to one embodiment of the present invention includes a positive substrate and a positive active material layer disposed directly on the positive substrate, or over the positive substrate with an intermediate layer interposed therebetween.

The positive substrate has conductivity. Whether the positive substrate has "conductivity" or not is determined with the volume resistivity of 10⁷ Ω cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 pm or more and 50 pm or less, more preferably 5 pm or more and 40 pm or less, still more preferably 8 pm or more and 30 pm or less, particularly preferably 10 pm or more and 25 pm or less. When the average thickness of the positive substrate is within the above-described range, it is possible to enhance the energy density per volume of the nonaqueous electrolyte energy storage device while increasing the strength of the positive substrate.

The intermediate layer is a layer disposed between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer contains first positive active material particles having a Feret diameter of 5 pm or less, second positive active material particles having a Feret diameter of more than 5 pm, and a conductive agent. The content of the conductive agent in the positive active material layer is less than 1.1% by mass, and the first positive active material particles are secondary particles having a ratio of an average secondary particle size to an average primary particle size of 3 or less, or primary particles that are not substantially aggregated. As described above, by using the first positive active material particles having a small particle size and having a Feret diameter of 5 pm or less and the second positive active material particles having a large particle size and having a Feret diameter of more than 5 pm in combination, the filling rate of the positive active material particles (the first positive active material particles and the second positive active material particles) in the positive active material layer can be increased, and the energy density of the obtained nonaqueous electrolyte energy storage device can be increased. In addition, since the content of the conductive agent in the positive active material layer is as small as less than 1.1% by mass, the content of the positive active material in the positive active material layer can be increased accordingly, and the energy density of the nonaqueous electrolyte energy storage device can be further increased. Furthermore, when the content of the conductive agent in the positive active material layer is as small as less than 1.1% by mass, particle cracking originating from the grain boundary of the positive active material particles composed of secondary particles having a small particle size and pulverization associated with the particle cracking may occur at the beginning of a charge-discharge cycle, and this may cause a decrease in the capacity retention ratio. However, according to the above configuration, when the second positive active material particles having a large particle size with a Feret diameter of more than 5 pm are secondary particles having a large grain boundary, even if particle cracking originating from the grain boundary occurring at the beginning of a charge-discharge cycle or the like occurs, the particle size after particle cracking remains relatively large, and pulverization hardly occurs. Therefore, the influence on the capacity retention ratio of the nonaqueous electrolyte energy storage device is small. In contrast, since the first positive active material particles having a Feret diameter of 5 pm or less and a small particle size are single particle-based particles having fewer grain boundaries than general secondary particles, pulverization of the positive active material particles is suppressed, and a decrease in the capacity retention ratio of the nonaqueous electrolyte energy storage device after a charge-discharge cycle can be suppressed. Therefore, according to this configuration, it is possible to suppress pulverization of the positive active material particles while increasing the filling rate of the positive active material particles in the positive active material layer and decreasing the content of the conductive agent in the positive active material layer, and it is possible to achieve a high-performance nonaqueous electrolyte energy storage device in which a high energy density and durability against a charge-discharge cycle are compatible at a high level. The positive active material layer contains optional components such as a binder, a thickener, and a filler, if necessary.

The first positive active material particles are positive active material particles having a Feret diameter of 5 pm or less. The first positive active material particles are single particle-based particles, that is, secondary particles having a ratio of an average secondary particle size to an average primary particle size of 3 or less, or primary particles that are not substantially aggregated. Since the first positive active material particles, which are so-called small particles, are single particle-based particles that are less likely to be pulverized, it is possible to suppress a decrease in the capacity retention ratio of the nonaqueous electrolyte energy storage device after a charge-discharge cycle, which is likely to occur when the content of the conductive agent in the positive active material layer is reduced.

The ratio of the average secondary particle size to the average primary particle size in the first positive active material particles may be 2.5 or less, 2.0 or less, or 1.8 or less (for example, 1.6 or less). In such a case, since each of the first positive active material particles is composed of a smaller number of primary particles, pulverization of the first positive active material particles is less likely to occur. The ratio of the average secondary particle size to the average primary particle size in the first positive active material particles may be 1 or more, or 1.2 or more. When the first positive active material particles are composed of only primary particles that are not substantially aggregated, the ratio of the average secondary particle size to the average primary particle size in the first positive active material particles is 1. The ratio of the average secondary particle size to the average primary particle size in the first positive active material particles may be any lower limit or more and any upper limit or less.

The lower limit of the average primary particle size of the first positive active material particles may be, for example, 2.0 pm, but is preferably 2.5 pm (for example, 2.8 pm). When the average primary particle size of the first positive active material particles is the above lower limit or more, pulverization of the first positive active material particles is less likely to occur, so that a decrease in the capacity retention ratio of the nonaqueous electrolyte energy storage device after a charge-discharge cycle can be further suppressed. The upper limit of the average primary particle size of the first positive active material particles may be, for example, 4.0 pm or 3.5 pm (for example, 3.0 pm). The average primary particle size of the first positive active material particles may be any lower limit or more and any upper limit or less.

The average secondary particle size of the first positive active material particles is, for example, preferably 1.0 pm or more and 5.0 pm or less, and more preferably 2.0 pm or more and 4.8 pm or less. In some aspects, the average secondary particle size of the first positive active material particles may be 3.0 pm or more, or 3.5 pm or more. The average secondary particle size of the first positive active material particles may be 4.6 pm or less or 4.4 pm or less. The average secondary particle size of the first positive active material particles may be any lower limit or more and any upper limit or less. By setting the average secondary particle size of the first positive active material particles within the above range, the filling rate of the positive active material particles (the first positive active material particles and the second positive active material particles) in the positive active material layer can be increased, and the energy density of the obtained nonaqueous electrolyte energy storage device can be increased.

The first positive active material particles which are single particle-based particles can be manufactured by a known method. The average primary particle size and the like can be controlled by manufacture conditions, and for example, when the firing temperature is set to a high temperature or the firing time is set to a long time in the manufacture process of the positive active material, crystals of primary particles grow and the average primary particle size increases. Alternatively, the primary particles can be formed by crushing secondary particles. As the first positive active material particles, a commercially available product may be used.

The second positive active material particles are positive active material particles having a Feret diameter of more than 5 pm. The second positive active material particles may be primary particles that are not substantially aggregated, but are preferably secondary particles from the viewpoint of manufacturability and the like. Since the second positive active material particles are relatively large particles, the second positive active material particles are secondary particles having a large number of grain boundaries, and even if particle cracking originating from a grain boundary occurs at the beginning of a charge-discharge cycle or the like, the particle size after the particle cracking remains relatively large, and pulverization hardly occurs, so that the influence on the capacity retention ratio is small. The ratio of the average secondary particle size to the average primary particle size in the second positive active material particles may be, for example, 2 or more and 100 or less, or 3 or more and 20 or less. In some aspects, the ratio of the average secondary particle size to the average primary particle size in the second positive active material particles may be 5 or more, or may be 8 or more (for example, 10 or more). In some aspects, the ratio of the average secondary particle size to the average primary particle size in the second positive active material particles may be 18 or less, or may be 16 or less (for example, 14 or less). The ratio of the average secondary particle size to the average primary particle size in the second positive active material particles may be any lower limit or more and any upper limit or less.

The lower limit of the average primary particle size of the second positive active material particles may be, for example, 0.2 pm, but is preferably 0.5 pm (for example, 0.8 pm). The upper limit of the average primary particle size of the second positive active material particles may be, for example, 3.0 pm or 2.5 pm (for example, 2.0 pm). The average primary particle size of the second positive active material particles may be any lower limit or more and any upper limit or less. In a preferred aspect, the average primary particle size of the second positive active material particles is smaller than the average primary particle size of the first positive active material particles. The ratio of the average primary particle size of the second positive active material particles to the average primary particle size of the first positive active material particles (second positive active material particles/first positive active material particles) is preferably 0.1 or more and less than 1, and more preferably 0.2 or more and 0.6 or less (for example, 0.25 or more and 0.5 or less). The ratio of the average primary particle size of the second positive active material particles to the average primary particle size of the first positive active material particles (second positive active material particles/first positive active material particles) may be any lower limit or more and any upper limit or less.

The average secondary particle size of the second positive active material particles is, for example, preferably 6.0 pm or more and 20.0 pm or less, and more preferably 8.0 pm or more and 15.0 pm or less from the viewpoint of manufacturability, handleability, and the like. In some aspects, the average secondary particle size of the second positive active material particles may be 10.0 pm or more, or 10.5 pm or more. In some aspects, the average secondary particle size of the second positive active material particles may be 14.0 pm or less, or 13.0 pm or less. The average secondary particle size of the second positive active material particles may be any lower limit or more and any upper limit or less.

The ratio of the average secondary particle size of the second positive active material particles to the average secondary particle size of the first positive active material particles (second positive active material particles/first positive active material particles) is preferably 1.5 or more and 10 or less, and more preferably 2 or more and 6 or less (for example, 2.5 or more and 5 or less). The ratio of the average secondary particle size of the second positive active material particles to the average secondary particle size of the first positive active material particles (second positive active material particles/first positive active material particles) may be any lower limit or more and any upper limit or less. The mass ratio of the first positive active material particles to the second positive active material particles contained in the positive active material layer (first positive active material particles : second positive active material particles) is preferably in the range of 1 : 9 to 9 : 1, and more preferably in the range of 1.5 : 8.5 to 7 : 3. In some aspects, the mass ratio of the first positive active material particles to the second positive active material particles (first positive active material particles : second positive active material particles) may be in the range of 1.8 : 8.2 to 5 : 5, or may be in the range of 2 : 8 to 4 : 6 (e.g. in the range from 2 : 8 to 3 : 7, e.g. 2 : 8). By setting the ratio and the mass ratio of the average secondary particle size in the first positive active material particles to the second positive active material particles within the above ranges, the filling rate of the positive active material particles (the first positive active material particles and the second positive active material particles) in the positive active material layer can be increased, and the energy density of the obtained nonaqueous electrolyte energy storage device can be increased.

In order to obtain the first positive active material particles and the second positive active material particles with a predetermined particle size, a crusher, a classifier, or the like can also be used. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The positive active material constituting the first positive active material particles and the second positive active material particles can be appropriately selected from known positive active materials. As a positive active material for a lithium ion secondary battery, a material capable of storing and releasing lithium ions is normally used. Examples of the positive active material include transition metal composite oxides that have an α-NaFeO₂-type crystal structure, transition metal composite oxides that have a spinel-type crystal structure, polyanion compounds, chalcogenides, and sulfur. Examples of the transition metal composite oxide having an α-NaFeO₂-type crystal structure include a lithium transition metal composite oxide having an α-NaFeO₂-type crystal structure, and examples of the transition metal composite oxide having a spinel-type crystal structure include a lithium-transition metal composite oxide having a spinel-type crystal structure. Examples of the lithium-transition metal composite oxides that have an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < γ < 1, 0 < 1-x-γ), Li[LiₓCo₍₁₋ₓ₎]O₂ (0 ≤ x < 0.5), Li[LiₓNi_{γ}Mn_{(1-x-γ)}]O₂ (0 <_ x < 0.5, 0 < γ < 1, 0 < 1-x-γ), Li[LiₓNi_{γ}Mn_{β}Co_{(1-x-γ-β)}]O₂ (0 ≤ x < 0.5, 0 < γ, 0 < β, 0.5 < γ + β < 1, 0 < 1-x-γ-β), and Li[LiₓNi_{γ}Co_{β}Al_{(1-x-γ-β)}]O₂ (0 ≤ x < 0.5, 0 < γ, 0 < β, 0.5 < γ + β < 1, 0 < 1-x-γ-β). Examples of the lithium-transition metal composite oxides that have a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include a titanium disulfide, a molybdenum disulfide, and a molybdenum dioxide. Some of atoms or polyanions in these materials may be substituted with atoms or anion species composed of other elements. These materials may have surfaces coated with other materials. One of these materials may be used alone, or two or more of these materials may be used in combination. The first positive active material particles and the second positive active material particles may be composed of the same positive active material or may be composed of different positive active materials, but are preferably composed of the same positive active material.

As the positive active material constituting the first positive active material particles and the second positive active material particles, transition metal composite oxides are preferable, transition metal composite oxides containing nickel element are more preferable, lithium transition metal composite oxides containing nickel element are still more preferable, lithium transition metal composite oxides containing nickel element, cobalt element, and manganese element or aluminum element are even still more preferable, and lithium transition metal composite oxides containing nickel element, cobalt element, and manganese element are particularly preferable. The lithium-transition metal composite oxide preferably has an α-NaFeO₂-type crystal structure. The use of such a lithium-transition metal composite oxide allows the energy density to be increased, for example. In addition, these positive active materials are generally manufactured in the form of secondary particles in which a large number of primary particles are aggregated, and are often used, and when the content of the conductive agent in the positive active material layer is reduced, the positive active material is pulverized by a charge-discharge cycle, and a phenomenon in which the capacity retention ratio decreases is likely to occur. Therefore, in one embodiment of the present invention, by using these positive active materials for the positive active material particles, particularly the first positive active material particles, it is possible to effectively suppress a decrease in the capacity retention ratio after a charge-discharge cycle of the nonaqueous electrolyte energy storage device, which is particularly likely to occur when the content of the conductive agent in the positive active material layer is reduced, in addition to the advantages such as the high energy density of these positive active materials.

As the lithium-transition metal composite oxide that has an α-NaFeO₂-type crystal structure, a compound represented by the following formula (1) is preferable.

Li_{1+α}Me_{1-α}O₂ ••• (1)

In the formula (1), Me is a metal element (excluding Li) containing Ni. The condition of 0 ≤ α < 1 is met.

Me in the formula (1) preferably further contains Co and Mn or Al in addition to Ni. Me is more preferably substantially composed of three elements of Ni, Co, and Mn, or three elements of Ni, Co, and Al, and still more preferably composed of three elements of Ni, Co, and Mn. Me may, however, contain other metal elements.

From viewpoints such as further increasing the electric capacity, the suitable content (composition ratio) of each of the constituent elements in the compound represented by the formula (1) is as follows. It is to be noted that the molar ratio is equal to the atomic number ratio.

In the formula (1), the lower limit of the molar ratio of Ni to Me (Ni/Me) is preferably 0.3, and more preferably 0.5 or 0.7 in some cases. In contrast, the upper limit of the molar ratio (Ni/Me) is preferably 0.9, and more preferably 0.8. By using these positive active materials for the first positive active material particles, it is possible to effectively suppress a decrease in the capacity retention ratio after a charge-discharge cycle of the nonaqueous electrolyte energy storage device, which is particularly likely to occur when the content of the conductive agent in the positive active material layer is reduced, in addition to the advantages such as the high energy density of these positive active materials.

In the formula (1), the lower limit of the molar ratio (Co/Me) of Co to Me is preferably 0.01, and more preferably 0.05. In contrast, the upper limit of the molar ratio (Co/Me) is preferably 0.5, and more preferably 0.4 or 0.2 in some cases.

In the formula (1), the lower limit of the molar ratio (Mn/Me) of Mn to Me is preferably 0.01, more preferably 0.05. In contrast, the upper limit of the molar ratio (Mn/Me) is preferably 0.5, and more preferably 0.4 or 0.2 in some cases.

In the formula (1), the lower limit of the molar ratio (Al/Me) of Al to Me may be 0, and is preferably 0.01, and more preferably 0.02 or 0.03 in some cases. In contrast, the upper limit of the molar ratio (Al/Me) is preferably 0.3, and more preferably 0.2 or 0.1 in some cases.

In the formula (1), the molar ratio (Li/Me) of Li to Me, that is, (1 + α)/(1 - α) may be 1. In contrast, the upper limit of the molar ratio (Li/Me) is preferably 1.6, and more preferably 1.4 or 1.2 in some cases.

Further, the composition ratio of the lithium-transition metal composite oxide refers to a composition ratio in the case of a completely discharged state provided by the following method. First, the nonaqueous electrolyte energy storage device is subjected to constant current charge with a current of 0.05 C until the voltage becomes an end-of-charge voltage during normal usage, so that the energy storage device is brought to a fully charged state. After a 30-minute pause, the energy storage device is subjected to constant current discharge with a current of 0.05 C to the lower limit voltage under normal usage. The energy storage device is disassembled to take out the positive electrode, and a test battery with a metal lithium electrode as a counter electrode is assembled, and subjected to constant current discharge at a current value of 10 mA per 1 g of the positive active material particles until the positive potential reaches 2.0 V vs. Li/Li⁺, thereby adjusting the positive electrode to the completely discharged state. The cell is disassembled again to take out the positive electrode. The nonaqueous electrolyte attached to the positive electrode taken out is sufficiently washed with a dimethyl carbonate, and the positive electrode is dried at room temperature for a whole day and night, and the lithium-transition metal composite oxide of the positive active material is then collected. The collected lithium-transition metal composite oxide is subjected to measurement. Operations from disassembly of the nonaqueous electrolyte energy storage device to collection of the lithium-transition metal composite oxide are performed in an argon atmosphere at a dew point of -60°C or lower.

Examples of suitable lithium-transition metal composite oxides include LiNi_{1/3}Co_{1/3}Mn_{1/3}O₂, LiNi_{3/5}Co_{1/5}Mn_{1/5}O₂, LiNi_{1/2}Co_{1/5}Mn_{3/10}O₂, LiNi_{1/2}Co_{3/10}Mn_{1/5}O₂, LiNi_{8/10}Co_{1/10}Mn_{1/10}O₂, and LiNi_{0.8}Co_{0.15}Al_{0.05}O₂.

Above all, the positive active material preferably contains the lithium-transition metal composite oxide in a proportion of 50% by mass or more (preferably 70 to 100% by mass, more preferably 80 to 100% by mass) of all in the positive active material layer, and it is more preferable to use a positive active material substantially composed only of the lithium-transition metal composite oxide.

The content of the positive active material particles (the total of the first positive active material particles and the second positive active material particles) in the positive active material layer is preferably 80% by mass or more and 99% by mass or less, and more preferably 85% by mass or more and 98.5% by mass or less. The lower limit of the content of the positive active material particles in the positive active material layer may be still more preferably 90% by mass, 93 by mass, 95% by mass, 96% by mass, 97% by mass, 98% by mass, or 98.0% by mass. The content of the positive active material particles in the positive active material layer falls within the range mentioned above, thereby allowing the conductivity and energy density of the positive active material layer to be increased in a well-balanced manner.

The conductive agent is not particularly limited as long as the agent is a material with conductivity. Examples of such a conductive agent include carbonaceous materials, metals, and conductive ceramics. Examples of the carbonaceous material include graphite, carbon black (such as acetylene black), and fibrous carbon. As the conductive agent, one of these materials may be used alone, or two or more of these materials may be used in combination. As the conductive agent, a carbonaceous material is preferable among these, and fibrous carbon is more preferable from the viewpoint of being able to exhibit good conductivity even in a small amount.

Examples of the fibrous carbon include carbon nanofibers, pitch-based carbon fibers, and carbon nanotubes (CNT). Among these, The CNT that is a graphene-based carbon can be suitably used.

The average diameter of the fibrous carbon is, for example, preferably 1 nm or more and 300 nm or less, more preferably 3 nm or more and 100 nm or less, still more preferably 5 nm or more and 50 nm or less, and even still more preferably 8 nm or more and 30 nm or less. In some aspects, the average diameter of the fibrous carbon may be 9 nm or more and 10 nm or more. In some aspects, the average diameter of the fibrous carbon may be 20 nm or less and 15 nm or less. The average diameter of the fibrous carbon can be set to any lower limit or more and any upper limit or less. When the average diameter of the fibrous carbon is within the above range, the conductivity of the positive active material layer is further improved even when the content of the conductive agent is small, and the discharge capacity, energy density, and the like of the nonaqueous electrolyte energy storage device can be increased. The "average diameter" of the fibrous carbon is an average value of diameters of arbitrary ten fibrous carbons in the SEM image.

The average aspect ratio (the ratio of the average length to the average diameter) of the fibrous carbon is, for example, preferably 10 or more and 10,000 or less, more preferably 100 or more, still more preferably 1,000 or more. In some aspects, the average aspect ratio of the fibrous carbon may be 1500 or more and 2000 or more. In some aspects, the average aspect ratio of the fibrous carbon may be 6000 or less and 3000 or less. The average aspect ratio of the fibrous carbon can be set to any lower limit or more and any upper limit or less. By using the fibrous carbon having an average aspect ratio in the above range, better conductivity of the positive active material layer can be exhibited, and the discharge capacity, energy density, and the like of the nonaqueous electrolyte energy storage device can be increased. The "average length" of the fibrous carbon is an average value of lengths of arbitrary ten fibrous carbons in the SEM image. In the calculation of the average aspect ratio, the ten particles of the fibrous carbon for determining the average diameter are preferably the same as the ten particles of the fibrous carbon for determining the average length, but the average diameter and the average length may be each determined for ten different particles of the fibrous carbon, and the ratio of the average length to the average diameter may be defined as the average aspect ratio. That is, the average aspect ratio is an average value of aspect ratios (lengths to diameters) of arbitrary ten fibrous carbons in the SEM image, or a ratio of an average length of arbitrary ten fibrous carbons which are the same or different to an average diameter of arbitrary ten fibrous carbons in the SEM image.

The average lattice spacing (d₀₀₂) of a (002) plane of the fibrous carbon, determined by an X-ray diffraction method with the use of a CuKα ray, is preferably less than 0.340 nm. When the average lattice spacing (d₀₀₂) of the (002) plane of the fibrous carbon is small with a high degree of crystallinity as described above, the conductivity of the positive active material layer is further increased. It is to be noted that the lower limit of the average lattice spacing (d₀₀₂) of the (002) plane of the fibrous carbon can be, for example, 0.330 nm. In addition, the full width at half maximum of a peak corresponding to the (002) plane of the fibrous carbon, determined by X-ray diffraction with the use of a CuKα ray, is, for example, 0.5° or more. The full width at half maximum for the peak corresponding to the (002) plane of the fibrous carbon is preferably less than 0.7°.

Fibrous carbon can be obtained by, for example, a method in which a polymer is formed into a fibrous form by a spinning method or the like and heat-treated under an inert atmosphere, a vapor phase growth method in which an organic compound is reacted at a high temperature in the presence of a catalyst, or the like. As the fibrous carbon, fibrous carbon obtained by a vapor phase growth method (vapor phase growth method fibrous carbon) is preferable. Commercially available fibrous carbon can be used.

The content of the conductive agent in the positive active material layer is less than 1.1% by mass, preferably 1.0% by mass or less, and more preferably 0.8% by mass or less or 0.6% by mass or less in some cases. By setting the content of the conductive agent in the positive active material layer to be less than the upper limit, the content of the positive active material particles can be increased, and as a result, the energy density of the nonaqueous electrolyte energy storage device can be increased. The lower limit of the content of the conductive agent in the positive active material layer is preferably 0.1% by mass, more preferably 0.3% by mass, and still more preferably 0.4% by mass. By setting the content of the conductive agent in the positive active material layer to the above lower limit or more, sufficient conductivity can be secured in the positive active material layer. The content of the conductive agent in the positive active material layer can be equal to or more than any of the lower limit values described above and less than or equal to any of the upper limit values described above.

Examples of the binder include: thermoplastic resins such as fluororesins (e.g., polytetrafluoroethylene (PTFE), polyvinylidene fluoride (PVDF)), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 0.3% by mass or more and 10% by mass or less, more preferably 0.5% by mass or more and 8% by mass or less, and may be still more preferably 5% by mass or less, 4% by mass or less, 3% by mass or less, or 2% by mass or less. The content of the binder is set to be equal to or more than the lower limit mentioned above, thereby allowing the positive active material to be stably held. In addition, the content of the binder is set to be equal to or less than the upper limit mentioned above, thereby allowing the content of the positive active material particles to be increased to increase the energy density.

Examples of the thickener include polysaccharide polymers such as a carboxymethylcellulose (CMC) and a methylcellulose. When the thickener has a functional group that is reactive with lithium and the like, the functional group may be deactivated by methylation or the like in advance. In the case of using a thickener, the content of the thickener in the positive active material layer is preferably 5% by mass or less, further preferably 1% by mass or less. The technique disclosed herein can be preferably carried out in an aspect in which the positive active material layer contains no thickener.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. In the case of using a filler, the content of the filler in the positive active material layer is preferably 5% by mass or less, and more preferably 1% by mass or less. The technique disclosed herein can be preferably carried out in an aspect in which the positive active material layer contains no filler.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as a component other than the positive active material, the conductive agents, the binder, the thickener, and the filler.

### <Method for manufacturing positive electrode for nonaqueous electrolyte energy storage device>

The positive electrode mentioned above can be fabricated, for example, by applying a positive composite paste to a positive substrate directly or with an intermediate layer interposed therebetween, and drying the paste. The positive composite paste includes respective components constituting the positive active material layer, such as first positive active material particles, second positive active material particles, a conductive agent, and a binder as an optional component. The positive composite paste typically further includes a dispersion medium. Examples of the dispersion medium used for preparing the positive composite paste include N-methylpyrrolidone (NMP) and toluene.

### <Nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is typically a stacked type obtained by stacking a plurality of positive electrodes and a plurality of negative electrodes with separators interposed therebetween, or a wound type obtained by winding a positive electrode and a negative electrode stacked with a separator interposed therebetween. The nonaqueous electrolyte is present with the positive electrode, negative electrode, and separator impregnated with the electrolyte. A nonaqueous electrolyte secondary battery (hereinafter, also referred to simply as a "secondary battery") will be described as an example of the nonaqueous electrolyte energy storage device.

### (Positive electrode)

The positive electrode used in the nonaqueous electrolyte energy storage device according to one embodiment of the present invention is the positive electrode for the nonaqueous electrolyte energy storage device according to one embodiment of the present invention described above.

### (Negative electrode)

The negative electrode includes a negative substrate and a negative active material layer disposed directly on the negative substrate or over the negative substrate with an intermediate layer interposed therebetween. The configuration of the intermediate layer is not particularly limited, and can be selected from the configurations exemplified for the positive electrode, for example.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, copper or a copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 pm or more and 35 pm or less, more preferably 3 pm or more and 30 pm or less, still more preferably 4 pm or more and 25 pm or less, particularly preferably 5 pm or more and 20 pm or less. When the average thickness of the negative substrate is within the above-described range, it is possible to enhance the energy density per volume of the nonaqueous electrolyte energy storage device while increasing the strength of the negative substrate.

The negative active material layer includes a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material can be appropriately selected from known negative active materials. As the negative active material for a lithium ion secondary battery, a material capable of occluding and releasing lithium ions is typically used. Examples of the negative active material include metal Li; metals or metalloids such as Si and Sn; metal oxides or metalloid oxides such as oxides of Si, oxides of Ti, and oxides of Sn; titanium-containing oxides such as Li₄Ti₅O₁₂, LiTiO₂, and TiNb₂O₇; polyphosphoric acid compounds; silicon carbides; and carbon materials such as graphite and non-graphitic carbon (easily graphitizable carbon or hardly graphitizable carbon). Among these materials, graphite and non-graphitic carbon are preferable. In the negative active material layer, one of these materials may be used alone, or two or more of these materials may be used in combination.

The term "graphite" refers to a carbon material in which the average lattice spacing (d₀₀₂) of a (002) plane determined by an X-ray diffraction method before charge-discharge or in a discharged state is 0.33 nm or more and less than 0.34 nm. Examples of the graphite include natural graphite and artificial graphite. Artificial graphite is preferable from the viewpoint that a material that has stable physical properties can be obtained.

The term "non-graphitic carbon" refers to a carbon material in which the average lattice spacing (d₀₀₂) of a (002) plane determined by an X-ray diffraction method before charge-discharge or in a discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from a petroleum pitch, a petroleum coke or a material derived from a petroleum coke, a plant-derived material, and an alcohol-derived material.

In this regard, the "discharged state" means a state discharged such that lithium ions that can be occluded and released in association with charge-discharge are sufficiently released from the carbon material as the negative active material. For example, the "discharged state" refers to a state where the open circuit voltage is 0.7 V or higher in a half cell that has, as a working electrode, a negative electrode including a carbon material as a negative active material, and has metal Li as a counter electrode.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 pm or less. When the negative active material is a carbon material, a titanium-containing oxide, or a polyphosphoric acid compound, the average particle size thereof may be 1 pm or more and 100 pm or less. When the negative active material is Si, Sn, an oxide of Si, an oxide of Sn, or the like, the average particle size thereof may be 1 nm or more and 1 pm or less. By setting the average particle size of the negative active material to be equal to or more than the lower limit mentioned above, the negative active material is easily manufactured or handled. By setting the average particle size of the negative active material to be equal to or less than the upper limit mentioned above, the electron conductivity of the negative active material layer is improved. A crusher, a classifier, or the like is used in order to obtain a powder with a predetermined particle size. The crushing method and the classification method can be selected from, for example, the methods exemplified for the positive electrode. When the negative active material is a metal such as metal Li, the negative active material layer may have the form of a foil.

The content of the negative active material in the negative active material layer is preferably 60% by mass or more and 99% by mass or less, more preferably 90% by mass or more and 98% by mass or less. The content of the negative active material falls within the range mentioned above, thereby allowing a balance to be achieved between the increased energy density and manufacturability of the negative active material layer.

### (Separator)

The separator can be appropriately selected from known separators. As the separator, for example, a separator composed of only a substrate layer, a separator where a heat resistant layer including heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and still more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, a simple substance or a complex of these substances may be used alone, or two or more thereof may be used in combination. Among these inorganic compounds, silicon oxide, aluminum oxide, or aluminosilicate is preferable from the viewpoint of safety of the nonaqueous electrolyte energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. The use of the polymer gel has the effect of suppressing liquid leakage. As the separator, the polymer gel may be used in combination with a porous resin film, a nonwoven fabric, or the like as described above.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some of the hydrogen atoms included in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, the volume ratio of the cyclic carbonate to the chain carbonate (cyclic carbonate : chain carbonate) preferably falls within the range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these examples, the lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these examples, an inorganic lithium salt is preferable, and LiPF₆ is more preferable.

The content of the electrolyte salt in the nonaqueous electrolyte solution is, at 20°C under 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, particularly preferably 0.7 mol/dm³ or more and 1.5 mol/dm³ or less. The content of the electrolyte salt falls within the range mentioned above, thereby allowing the ionic conductivity of the nonaqueous electrolyte solution to be increased.

The nonaqueous electrolyte solution may include an additive, besides the nonaqueous solvent and the electrolyte salt. Examples of the additive include aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used alone, or two or more thereof may be used in combination.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the nonaqueous electrolyte solution. The content of the additive falls within the range mentioned above, thereby making it possible to improve capacity retention performance or cycle performance after high-temperature storage, and to further improve safety.

For the nonaqueous electrolyte, a solid electrolyte may be used, or a nonaqueous electrolyte solution and a solid electrolyte may be used in combination.

The solid electrolyte can be selected from any material with ionic conductivity, which is solid at normal temperature (for example, 15°C to 25°C), such as lithium, sodium and calcium. Examples of the solid electrolyte include sulfide solid electrolytes, oxide solid electrolytes, nitride solid electrolytes, and polymer solid electrolytes.

Examples of the sulfide solid electrolyte include Li₂S-P₂S₅, LiI-Li₂S-P₂S₅, and Li₁₀Ge-P₂S₁₂ in the case of a lithium ion secondary battery.

The shape of the nonaqueous electrolyte energy storage device according to the present embodiment is not particularly limited, and examples thereof include cylindrical batteries, prismatic batteries, flat batteries, coin batteries, and button batteries.

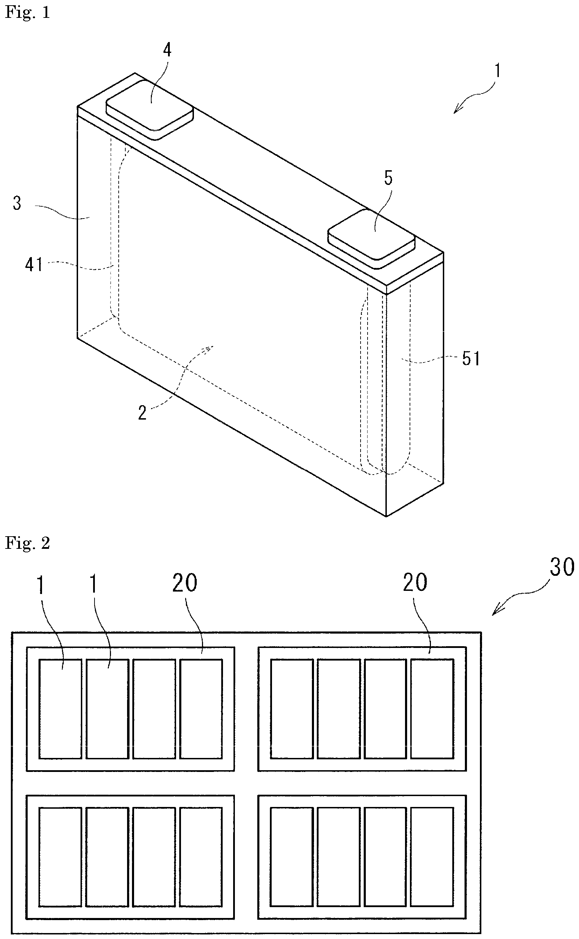

Fig. 1 illustrates a nonaqueous electrolyte energy storage device 1 as an example of prismatic batteries. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device according to the present embodiment can be mounted as an energy storage unit (battery module) configured by assembling a plurality of nonaqueous electrolyte energy storage devices on a power source for automobiles such as electric vehicles (EV), hybrid vehicles (HEV), and plug-in hybrid vehicles (PHEV), a power source for electronic devices such as personal computers and communication terminals, or a power source for power storage, or the like. In this case, the technique of the present invention may be applied to at least one nonaqueous electrolyte energy storage device included in the energy storage unit.

Fig. 2 illustrates an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

### <Method for manufacturing energy storage device>

A method for manufacturing the nonaqueous electrolyte energy storage device according to the present embodiment can be appropriately selected from publicly known methods. The manufacturing method includes, for example, preparing an electrode assembly, preparing a nonaqueous electrolyte, and housing the electrode assembly and the nonaqueous electrolyte in a case. Preparing the electrode assembly includes: preparing a positive electrode and a negative electrode, and forming an electrode assembly by stacking or winding the positive electrode and the negative electrode with a separator interposed therebetween.

Housing the nonaqueous electrolyte in a case can be appropriately selected from known methods. For example, in the case of using a nonaqueous electrolyte solution for the nonaqueous electrolyte, the nonaqueous electrolyte solution may be injected from an inlet formed in the case, and the inlet may be then sealed.

### <Other embodiments>

The nonaqueous electrolyte energy storage device according to the present invention is not limited to the embodiment described above, and various changes may be made without departing from the gist of the present invention. For example, to the configuration of an embodiment, the configuration of another embodiment can be added, and a part of the configuration of an embodiment can be replaced by the configuration of another embodiment or a well-known technique. Furthermore, a part of the configuration according to one embodiment can be deleted. In addition, a well-known technique can be added to the configuration according to one embodiment.

While a case where the nonaqueous electrolyte energy storage device is used as a nonaqueous electrolyte secondary battery (for example, lithium ion secondary battery) that can be charged and discharged has been described in the embodiment mentioned above, the type, shape, dimensions, capacity, and the like of the nonaqueous electrolyte energy storage device are arbitrary. The present invention can also be applied to various secondary batteries, and capacitors such as electric double layer capacitors and lithium ion capacitors.

While the electrode assembly with the positive electrode and the negative electrode stacked with the separator interposed therebetween has been described in the embodiment mentioned above, the electrode assembly may include no separator. For example, the positive electrode and the negative electrode may be brought into direct contact with each other, with a non-conductive layer formed on the active material layer of the positive electrode or negative electrode.

### EXAMPLES

Hereinafter, the present invention will be described more specifically with reference to examples. The present invention is not limited to the following examples.

### [Example 1]

### (Fabrication of positive electrode)

As positive active material particles, LiNi_{0.8}Co_{0.1}Mn_{0.1}O₂ single particle-based particles A and LiNi_{0.8}Co_{0.1}Mn_{0.1}O₂ secondary particles B were used. In addition, CNT (average diameter: 10 nm, average length: 25 pm) as a fibrous carbon was used as a conductive agent, and polyvinylidene fluoride (PVDF) was used as a binder. An appropriate amount of N-methyl-pyrrolidone (NMP) as a dispersion medium was added to a mixture obtained by mixing positive active material particles (the sum of the single particle-based particles A and the secondary particles B), a conductive agent, and a binder at a mass ratio of 98.3 : 0.5 : 1.2 in terms of solid content to prepare a positive composite paste. The positive composite paste was applied onto a surface of an aluminum foil that served as a positive substrate, and dried to prepare a positive active material layer. Thereafter, roll pressing was performed to obtain a positive electrode. The average primary particle size and the average secondary particle size of the first positive active material particles (positive active material particles having a Feret diameter of 5 pm or less) and the second positive active material particles (positive active material particles having a Feret diameter of more than 5 pm) contained in the positive active material layer were as shown in Table 1.

### (Fabrication of negative electrode)

To a mixture obtained by mixing graphite as a negative active material, styrene butadiene rubber (SBR) as a binder, and carboxymethyl cellulose (CMC) as a thickener at a mass ratio of 98.0 : 1.0 : 1.0 in terms of solid content, an appropriate amount of water as a dispersion medium was added to prepare a negative composite paste. The negative composite paste was applied onto a surface of a copper foil that served as a negative substrate, and dried to form a negative active material layer. Thereafter, roll pressing was performed to obtain a negative electrode.

### (Assembly of nonaqueous electrolyte energy storage device)

An electrode assembly was produced using the polyolefin microporous membrane as the positive electrode, the negative electrode, and the separator. The electrode assembly was housed in a case, and a nonaqueous electrolyte was injected into the case to assemble a nonaqueous electrolyte energy storage device of Example 1. As a nonaqueous electrolyte, a solution obtained by dissolving lithium hexafluorophosphate (LiPF₆) as an electrolyte salt at a concentration of 1.0 mol/dm³ in a nonaqueous solvent obtained by mixing ethylene carbonate (EC), ethyl methyl carbonate (EMC), and dimethyl carbonate (DMC) at a volume ratio of 30:35:35 was used.

### [Comparative Example 1 and Reference Examples 1 to 4]

The types of the first positive active material particles and the second positive active material particles, the average primary particle size and the average secondary particle size, the type of the conductive agent, and the content of the conductive agent in the solid content in the positive composite paste (That is, the content of the conductive agent in the positive active material layer to be formed) were as shown in Table 1. In addition, the content of the binder was the same as in Example 1, and the content of the positive active material particles was adjusted together with the content of the conductive agent. Nonaqueous electrolyte energy storage devices of Comparative Example 1 and Reference Examples 1 to 4 were prepared in the same manner as in Example 1 except for these points. The second positive active material particles contained in the positive active material layer of each of the nonaqueous electrolyte energy storage devices of Reference Examples 3 and 4 are particles of the same size, but the average primary particle size and the average secondary particle size thereof are not measured. In Table 1, "AB" represents acetylene black.

### [Evaluation]

### (Initial discharge capacity)

For each nonaqueous electrolyte energy storage device, a discharge capacity confirmation test was performed under the following conditions. The energy storage devices were subjected to constant current charge to 4.25 V at a charge current of 0.1 C at 25°C, and then constant voltage charge at 4.25 V With regard to the charge termination conditions, charge was performed until the charge current reached 0.05 C. After the charge, a pause of 10 minutes was provided, and then, the energy storage devices were subjected to constant current discharge to 2.75 V at a discharge current of 0.2 C at 25°C. The discharge capacity at this time was defined as an "initial discharge capacity".

### (Charge-discharge cycle test)

Each of the obtained nonaqueous electrolyte energy storage devices was subjected to the following charge-discharge cycle test. After storage in a thermostatic bath at 45°C for 2 hours, constant current charge was performed up to 4.25 V at a charge current of 1.0 C, and then constant voltage charge was performed at 4.25 V With regard to the charge termination conditions, the charge was performed until the total charge time reached 3 hours. Thereafter, a pause period of 10 minutes was provided. Constant current discharge was performed with a discharge current of 1.0 C until the voltage became 2.75 V, and then a pause period of 10 minutes was provided. The charging and discharging steps constituted one cycle, and the cycle was performed 1000 cycles. The charging, discharging and pausing were performed in a thermostatic bath at 45°C.

### (Capacity retention ratio)

After the charge-discharge cycle test was performed, the discharge capacity after the charge-discharge cycle test was measured for each nonaqueous electrolyte energy storage device under the same conditions as in the measurement of the initial discharge capacity. The percentage of the discharge capacity after the charge-discharge cycle test to the initial discharge capacity was determined as a capacity retention ratio. With respect to the capacity retention ratio, nonaqueous electrolyte energy storage devices having the same type and average particle size of each positive active material particle constituting the positive active material layer were compared with each other. Specifically, among nonaqueous electrolyte energy storage devices having the same type and average particle size of each positive active material particle constituting the positive active material layer, based on the capacity retention ratio of a nonaqueous electrolyte energy storage device having a conductive agent content of 4.0% (100.0%), and the ratio of the capacity retention ratio of other nonaqueous electrolyte energy storage devices was determined as the ratio of the capacity retention ratio (%). More specifically, the ratio of the capacity retention ratio in Comparative Example 1 is a value based on Reference Example 1 (100.0%). The ratio of the capacity retention ratio in Example 1 is a value based on Reference Example 2 (100.0%). The ratio of the capacity retention ratio of Reference Example 4 is a value based on Reference Example 3 (100.0%).

The results are shown in Table 1.

**[Table 1]**

| | First positive active material particles | | | Second positive active material particles | | | Conductive agent | | Evaluation |
|---|---|---|---|---|---|---|---|---|---|
| | Type | Average primary particle size (µm) | Average secondary particle size (µm) | Type | Average primary particle size (µm) | Average secondary particle size (µm) | Type | Content (% by mass) | Ratio of the capacity retention ratio (%) |
| Reference Example 1 | LiNi_{0.8}Co_{0.1}Mn_{0.1}O₂ | 0.6 | 3.9 | LiNi_{0.8}Co_{0.1}Mn_{0.1}O₂ | 0.9 | 11.5 | AB | 4.0 | 100.0 |
| Comparative Example 1 | LiNi_{0.8}Co_{0.1}Mn_{0.1}O₂ | 0.6 | 3.9 | LiNi_{0.8}Co_{0.1}Mn_{0.1}O₂ | 0.9 | 11.5 | CNT | 0.5 | 92.6 |
| Reference Example 2 | LiNi_{0.8}Co_{0.1}Mn_{0.1}O₂ | 2.8 | 4.4 | LiN_{0.8}Co_{0.1}Mn_{0.1}O₂ | 0.9 | 11.5 | AB | 4.0 | 100.0 |
| Example 1 | LiNi_{0.8}Co_{0.1}Mn_{0.1}O₂ | 2.8 | 4.4 | LiNi_{0.8}Co_{0.1}Mn_{0.1}O₂ | 0.9 | 11.5 | CNT | 0.5 | 96.1 |
| Reference Example 3 | LiNi_{0.6}Co_{0.2}Mn_{0.2}O₂ | 0.7 | 3.8 | LiNi_{0.6}Co_{0.2}Mn_{0.2}O₂ | - | - | AB | 4.0 | 100.0 |
| Reference Example 4 | LiNi_{0.6}CO_{0.2}Mn_{0.2}O₂ | 0.7 | 3.8 | LiNi_{0.6}Co_{0.2}Mn_{0.2}O₂ | - | - | CNT | 1.1 | 100.0 |

Comparing between the nonaqueous electrolyte energy storage device of Reference Example 1 in which the first positive active material particles, which are so-called small particles, are not single particle-based particles with the nonaqueous electrolyte energy storage device of Comparative Example 1 shows that the nonaqueous electrolyte energy storage device of Comparative Example 1 in which the content of the conductive agent in the positive active material layer is small significantly decreases the capacity retention ratio after the charge-discharge cycle test (the ratio of the capacity retention ratio is small). On the other hand, comparing the nonaqueous electrolyte energy storage device of Reference Example 2 in which the first positive active material particles are single particle-based particles with the nonaqueous electrolyte energy storage device of Example 1 shows that in the nonaqueous electrolyte energy storage device of Example 1, the decrease in the capacity retention ratio after the charge-discharge cycle test, which occurs when the content of the conductive agent in the positive active material layer is reduced, is suppressed as compared with Comparative Example 1 in which the first positive active material particles are not single particle-based particles.

Further, it shows that as in the nonaqueous electrolyte energy storage device of Reference Example 4, when the content of the conductive agent in the positive active material layer is 1.1% by mass, a phenomenon of decreasing the capacity retention ratio after a charge-discharge cycle does not occur, and as in the nonaqueous electrolyte energy storage device of Comparative Example 1, when the content of the conductive agent in the positive active material layer is less than 1.1% by mass, a phenomenon of decreasing the capacity retention ratio after a charge-discharge cycle occurs.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A positive electrode for a nonaqueous electrolyte energy storage device, the positive electrode comprising a positive active material layer containing:
first positive active material particles having a Feret diameter of 5 µm or less in a projection image obtained by scanning electron microscope (SEM) observation; second positive active material particles having a Feret diameter of more than 5 µm in a projection image obtained by SEM observation; and a conductive agent,
wherein a content of the conductive agent in the positive active material layer is less than 1.1% by mass, and
the first positive active material particles are secondary particles having a ratio of an average secondary particle size to an average primary particle size of 3 or less, or primary particles which are not substantially aggregated.

2. The positive electrode according to claim 1, wherein the conductive agent is fibrous carbon.

3. The positive electrode according to claim 1 or 2, wherein the first positive active material particles have an average primary particle size of 2.8 µm or more.

4. The positive electrode according to claim 1 or 2, containing a transition metal composite oxide containing a nickel element as the first positive active material particles.

5. A nonaqueous electrolyte energy storage device comprising the positive electrode according to claim 1 or 2.
